# EUROPEAN PATENT SPECIFICATION

(11) **EP 1 800 853 B1**
(45) Date of publication and mention of the grant of the patent: **14.02.2018**
(21) Application number: 06026570.9
(22) Date of filing: 21.12.2006
(51) Int. Cl.: B32B 3/00

(54) **Board material**
Plattenmaterial
Matériau pour plaque

(30) Priority: 21.12.2005 US 316547
(43) Date of publication of application: 27.06.2007
(73) Proprietor: Johns Manville, Denver, CO 80202 (US)
(72) Inventor: Nandi, Malay, Littleton, Colorado 80124 (US); Agrawal, Gaurav, Aurora, Colorado 80016 (US)
(74) Representative: Mai Dörr Besier European Patent Attorneys

(56) References cited:
- EP-A1- 1 016 757

## Description

The invention relates to an improved faced board material employing a fibrous mat facer wherein the board displays smooth attractive surface characteristics combined with good structural integrity. Difficulties commonly encountered in the prior art when seeking to achieve a smooth outer surface as well as good penetration of the cementitious core material into the fibrous mat facer are effectively ameliorated. Such penetration facilitates the achievement of good adhesion of the board components upon the setting of the cementitious core material

### BACKGROUND OF THE INVENTION

Faced boards formed from cementitious material are typically used in the construction of modern buildings, for example, as surfaces for both interior and exterior walls and ceilings and the like. Such boards are typically relatively easy and inexpensive to install, finish, and maintain, and in suitable forms, can be relatively fire resistant.

For instance, wallboard formed of a gypsum core sandwiched between facing layers is used in the construction of virtually every modern building. In its various forms, the material is employed as a surface for walls and ceilings and the like, both interior and exterior.

Although paper-faced wallboard is most commonly used for finishing interior walls and ceilings, other forms with different kinds of facings have superior properties that are essential for other uses. One known facing material is a nonwoven fiberglass mat.

Gypsum wallboard and gypsum panels are traditionally manufactured by a continuous process. In this process, a gypsum slurry is first generated in a mechanical mixer by mixing at least one of anhydrous calcium sulfate (CaSO₄) and calcium sulfate hemihydrate (CaSO₄.1/2H₂O, also known as calcined gypsum), water, and other substances, which may include set accelerants, waterproofing agents, reinforcing mineral, glass fibers, and the like. The gypsum slurry is normally deposited on a continuously advancing, lower facing sheet, such as kraft paper. Various additives, e.g., cellulose and glass fibers, are often added to the slurry to strengthen the gypsum core once it is dry or set. Starch is frequently added to the slurry in order to improve the adhesion between the gypsum core and the facing. A continuously advancing upper facing sheet is laid over the gypsum and the edges of the upper and lower facing sheets are pasted to each other with a suitable adhesive. The facing sheets and gypsum slurry are passed between parallel upper and lower forming plates or rolls in order to generate an integrated and continuous flat strip of unset gypsum sandwiched between the sheets. Such a flat strip of unset gypsum is known as a facing or liner. The strip is conveyed over a series of continuous moving belts and rollers for a period of several minutes, during which time the core begins to hydrate back to gypsum (CaSO₄.2H₂O). The process is conventionally termed "setting," since the rehydrated gypsum is relatively hard. During each transfer between belts and/or rolls, the strip is stressed in a way that can cause the facing to delaminate from the gypsum core if its adhesion is not sufficient. Once the gypsum core has set sufficiently, the continuous strip is cut into shorter lengths or even individual boards or panels of prescribed length.

After the cutting step, the gypsum boards are fed into drying ovens or kilns so as to evaporate excess water. Inside the drying ovens, the boards are blown with hot drying air. After the dried gypsum boards are removed from the ovens, the ends of the boards are trimmed off and the boards are cut to desired sizes. The boards are commonly sold to the building industry in the form of sheets nominally 4 feet wide and 8 to 12 feet or more long and in thicknesses from nominally about ¼ to 1 inches, the width and length dimensions defining the two faces of the board.

While paper is widely used as a facing material for gypsum board products because of its low cost, many applications demand water resistance that paper facing cannot provide. Upon exposure to water either directly in liquid form or indirectly through exposure to high humidity, paper is highly prone to degradation, such as by delamination, that substantially compromises its mechanical strength. Gypsum products typically rely on the integrity of the facing as a major contributor to their structural strength. Consequently, paper-faced products are generally not suited for exterior or other building uses in which exposure to moisture conditions is presumed.

In addition, there is growing attention being given to the issue of mold and mildew growth in building interiors and the potential adverse health impact such activity might have on building occupants. The paper facing of conventional gypsum board contains wood pulp and other organic materials that may act in the presence of moisture or high humidity as nutrients for such microbial growth. A satisfactory alternative facing material less susceptible to growth is highly sought.

A further drawback of paper-faced gypsum board is flame resistance. In a building fire, the exposed paper facing quickly burns away. Although the gypsum itself is not flammable, once the facing is gone the board's mechanical strength is greatly impaired. At some stage thereafter the board is highly likely to collapse, permitting fire to spread to the underlying framing members and adjacent areas of a building, with obvious and serious consequences. A board having a facing less susceptible to burning would at least survive longer in a fire and thus be highly desirable in protecting both people and property.

To overcome these and other problems, a number of alternatives to paper facing have been proposed. U.S. Pat. No. 4,647,496 discloses an exterior insulation system including a fibrous mat-faced gypsum board having a set gypsum core that is water-resistant. The fibrous mat is preferably sufficiently porous for the water in the gypsum slurry to evaporate during the production drying operation as the gypsum sets. The mat comprises fibrous material that can be either mineral-type or a synthetic resin. One preferred mat comprises nonwoven glass fibers, randomly oriented and secured together with a modified or plasticized urea-formaldehyde resin binder, and sold as DURA-GLASS® 7502 by the Johns Manville Building Materials Corporation.

However, gypsum board products incorporating such conventional fibrous mats have proven to have certain drawbacks. While fibrous mats are undesirably more costly than the traditionally used kraft paper, there are other, more troublesome issues as well. Some persons are found to be quite sensitive to the fiberglass mat, and develop skin irritations and abrasions when exposed to the mat at various stages, including the initial production of the mat, the manufacture of composite gypsum board with the mat facing, and during the cutting, handling, and fastening operations (e.g., with nails or screws) that attend installation of the end product during building construction. Handling of the mat, and especially cutting, is believed to release glass fibers responsible for the irritation. The fibers may either become airborne or be transferred by direct contact. As a result, workers are generally forced to wear long-sleeved shirts and long pants and to use protective equipment such as dust masks. Such measures are especially unpleasant in the sweaty, hot and humid conditions often encountered either in manufacturing facilities or on a construction job-site.

There have been suggestions that a small portion of the glass fiber in such mats be replaced by polymer fiber materials and that an acrylic binder be used instead of urea-formaldehyde resin. While gypsum boards incorporating such mats have somewhat improved strength and handling characteristics, they are undesirably more expensive to make and stiffer and less fire resistant. Moreover, the problems of irritation from dust released, e.g., during cutting, remain.

In addition, many of the available non-paper faced gypsum boards have further features that make them undesirable for many of the wall facing applications for which they are intended. For example, the surface roughness of current fiber-faced boards makes them difficult to finish satisfactorily by normal painting, because the texture of the mat remains perceptible through the paint. The fibers in the mat themselves give rise to various asperities, and to additional, larger-sized irregularities often termed in the industry with descriptives such as "orange peel", "cockle", or similarly evocative terms describing surface non-planarity. The perceived smoothness of a board surface is the result of a complex interplay between various topographic features of the board, including the size, depth, spacing, and regularity of the features. In most instances, the smoothness of different board surfaces may readily be compared and ranked by visual inspection, especially under illumination by obliquely incident light. In addition, image analysis techniques are useful in quantifying certain of the topological features seen on various gypsum board surfaces.

Many of the aforementioned surface defects arise during the drying or curing of the mat or gypsum board. Even after painting, these defects and the underlying fibrous texture remain perceptible and aesthetically unappealing. As a result, a uniform, smooth finish can be achieved only in conjunction with a prior ameliorative treatment. Typically it is necessary to skim coat the surface with drywall joint compound or the like and then sand to a requisite smoothness to achieve a surface that will accept paint satisfactorily. This treatment must be accomplished at the construction site, resulting in added labor and materials cost. The additional steps entail inconvenience and delay, the consequences of the time needed for applying and drying the coating, and the generation of further nuisance dust. These difficulties are not encountered with paper-faced gypsum board, whose as-produced surface is smooth enough to accept paint readily with a minimum of surface preparation. Accordingly, current fiber-faced gypsum board is seldom if ever used for interior finished walls.

Another form of mat-faced gypsum board is known from U.S. Pat. No. 4,879,173, which discloses a mat of nonwoven fibers having a reinforcing resinous binder that can comprise a single resin or a mixture of resins, either thermoplastic or thermosetting. Exemplary resins disclosed include a styrene-acrylic copolymer and a self-crosslinking vinyl acetate-acrylic copolymer. A small amount of the binder is applied to the surface of the mat and penetrates but part of the way therethrough. The board is said to be useful as a support member in a built-up roof. The highly textured surface of the mat binder provides many interstices into which can flow an adhesive used to adhere an overlying component. However, considerable care is required in using a mat containing substantial numbers of voids as a facer for gypsum board. Conventional processing that incorporates deposition of a relatively wet slurry is generally found to result in considerable intrusion of the slurry through the mat and onto the faced surface, which is frequently undesirable. Prevention of this excess intrusion typically requires very careful control of the slurry viscosity, which, in turn, frequently leads to other production problems. Alternative mats, which inherently limit intrusion, yet still have sufficient permeability to permit water to escape during the formation and heat drying of the gypsum board are thus eagerly sought as a simpler alternative.

A fibrous mat facer with improved strike-through resistance and useful as a facer substrate or carrier for receiving a curable substance in a fluid state is disclosed by U.S. Pat. No. 4,637,951. The porous, nonwoven mat comprises a blend of microfibers intermixed and dispersed with base fibers and bound with a binder comprising a water miscible combination of a heat-settable polymer. The mat is said to be useful in forming composite materials employing a curable thermoset, preferably foamable material such as a polyurethane or polyisocyanurate rigid foam board and as a carrier web in the vinyl flooring industry where the settable polymer comprises a vinyl plastisol.
A further multilayer Nonwoven mat comprising a blend of fibers and the use of such multilayer Nonwoven as facer material for gypsum boards is disclosed in EP-A-1.016,757.

See also, the approaches disclosed in U.S. Pat. Application Publication Nos. 2004/0266303 and 2004/0266304.

Notwithstanding the advances in the field of gypsum boards and related articles, there remains a need for a readily and inexpensively produced mat-faced gypsum board having one or more of a smoother surface, a stronger internal bond to prevent delamination of the facer when subjected to prolonged wetness after installation, a surface requiring less paint to produce an aesthetically acceptable finished wall, ceiling, or the like, and better flame and mold resistance.

It is an object of the present invention to provide an improved faced board material employing a fibrous mat facer wherein the board displays smooth attractive outer surface characteristics combined with good structural integrity.

Other objects of the present invention will become apparent to those skilled in the art upon a review of the following description and appended claims.

### SUMMARY OF THE INVENTION

A broad material is provided comprising a set cementitious core having adhered to at least one of its surfaces as a facer a multilayer nonwoven fibrous mat comprising at least two layers including an inner layer and an outer layer wherein the outer layer comprises relatively fine fibers having a diameter of approximately 1 to 10 microns so as to make possible an aesthetically pleasing relatively smooth outer surface and an inner layer comprising relatively coarser fibers having a greater diameter than those of the inner layer with the coarser fibers providing interstices between adjoining fibers of the inner layer so as to promote the ingress of the cementitious core material prior to setting with the achievement of enhanced adhesion between the set cementitious core and the multilayer nonwoven fibrous mat.

In addition the instant invention provides fro a board material as claimed in claim 13.

### DETAILED DESCRIPTION OF PREFERRED EMBODIMENTS

A multilayer nonwoven fibrous mat is utilized as a facer on at one of the surfaces of a set cementitious core having characteristics that make possible the formation of improved board material. Such fibrous mat facer always is present upon the side of the board that is exposed during use. The same facer or a different facer can be provided on the opposite side of the board material.

The multilayer nonwoven fibrous mat possesses an inner layer and an outer layer. One or more intermediate layers optionally may be present between the inner layer and the outer layer. All layers are joined so as to provide an integral fibrous mat that resists separation during routine handling experienced during board formation and board use. In a preferred embodiment no intermediate layer is present and the board comprises two layers and optionally a transition zone between layers as discussed hereafter.

The outer layer of the multilayer nonwoven fibrous mat comprises relatively fine fibers having a diameter of approximately 1 to 10 microns. Such fine fibers make possible an aesthetically pleasing relatively smooth outer surface. Such outer surface can be contacted by the skin without the perception of unpleasant itchiness, and is capable of being painted in a conventional manner while displaying a smooth and uniform surface character.

The inner layer of the multilayer nonwoven fibrous mat comprises fibers having a greater diameter than those of the outer layer with the coarser fibers because of their size providing greater interstices between adjoining fibers so as to promote the ingress of the cementitious core material prior to setting with the achievement of enhanced adhesion between the set cementitious core and the multilayer nonwoven fibrous mat. In a preferred embodiment the fibers of the inner layer of the multilayer nonwoven fibrous mat have a diameter of approximately 12 to 30 microns, and most preferably approximately 15 to 20 microns.

The fibers present in the multilayer fibrous mat can be inorganic or formed of a natural or synthetic polymeric material. Preferred inorganic fibers are glass fibers. Representative glass fibers are E glass, C glass, T glass, S glass, sodium torosilicate glass, and mixtures thereof. Natural fibers such as cellulosic fibers can be utilized as can fibers of a thermoplastic polymeric material such as polypropylene, polyester or polyamide. Glass fibers of the appropriate diameters are preferred primarily in view of cost considerations and the ability to well control fiber diameters. Particularly preferred glass fibers are of the E type.

The layers of the nonwoven fibrous mat preferably are formed of discontinuous chopped fibers; however, a nonwoven formed of bonded substantially continuous filaments likewise can be utilized. Preferred chopped glass fiber lengths are approximately 0.635cm to 3.81 cm (0.25 to 1.5 inces), and most preferably approximately 1.905cm to 2.54cm (0.75 to 1 inch).

The respective layers of the nonwoven fibrous mat can be formed by means known in the art, and are selected to have the desired thicknesses in order facilitate the advantageous results made possible by the present invention. Preferred layer thicknesses for many end uses are approximately 0.508mm to 1.016mm (20 to 40 mils), and most preferably approximately 0.7366mm to 0.889mm (29 to 35 mils).

In a preferred embodiment the multilayer nonwoven fibrous mat while utilizing fibers of the specified diameters is formed in accordance with the teachings of commonly assigned U.S. Pat. Application No. 11/179,393, filed July 12, 2005. Such method for making a multilayer nonwoven fibrous mat comprises forming a first slurry containing fibers, forming a second slurry containing fibers, feeding the first slurry to a manifold on a forming box, feeding the second slurry to a second manifold on the forming box, feeding the two slurries inside the forming box to a moving forming wire, the two slurries separated from each other for a portion of the distance to the forming wire with a lamella, the lamella ending a significant distance before reaching the forming wire, forming a first layer on the moving forming wire from the first slurry, forming a transition zone on top of the first layer from a mixture of the two slurries, forming a second layer on top of the transition zone from the second slurry to form a wet multilayer web or mat, transferring the wet multilayer web to a second moving screen, and drying to form a multilayer mat containing a transition zone having a thickness of at least one percent of the thickness of the multilayer mat. The thickness of the transition zone when present commonly is in the range of approximately 2 to 10 percent of the thickness of the multilayer nonwoven fibrous mat, and preferably approximately 5 to 7 percent of the thickness of the multilayer nonwoven fibrous mat.

Any of the resinous binders used to bond fibers together in nonwoven mats can be used in the present invention, and typically are resins that can be put into aqueous solution or an emulsion latex. Typical binders meeting this description are styrenebutadiene rubber, ethylene-vinylchloride, polyvinylidenechloride, modified polyvinylchloride, polyvinyl alcohol, ethylene vinylacetate, polyvinyl acetate, ethylacrylate-methylmethacrylate acrylic copolymer latex, non-carboxylated acrylic with acrylonitrile copolymer latex, carboxylated butyacrylic copolymer latex, urea-formaldehyde latex, melamine-formaldehyde latex, polyvinylchloride-acrylic latex, methylmethacrylate-styrene copolymer latex, styrene-acrylic copolymer latex, phenol-formaldehyde latex, vinyl-acrylic latex, polyacrylic acid latex, etc. Of these conventional modified urea-formaldehyde resins are most typical because of their cost, bonding strength to fibers, particularly glass fibers, and acceptability for various applications.

Particles can be included in the dilute aqueous slurry used to bind one or more layers. Typical types of particles are fillers, whitening or coloring pigments, carbon particles, thermoplastic polymer particles, intumescent particles, anti-fungal particles, metal particles, pesticides, herbicides, glass microspheres or particles, or phase change particles, i.e., particles that absorb heat or release heat due to a phase change in the temperature range of the mat application. Representative particles include ground limestone, calcium carbonate, clay, sand, mica, talc, gypsum, aluminum trihydrate, antimony oxide, etc., and combinations thereof. The particles can be of a broad size range such as between about a few microns up to almost the thickness of the mat, but typically are in the range of a few microns up to about 4 mm in diameter more typically up to about 3 mm or even up to about 1 to 2 mm in diameter. The particle size of the particles will usually be determined by the material being used and its purpose. Some materials, such as clay, typically break down, slake, in water and the slurry preparation to produce a significant percentage of particles of only a few microns in diameter, while other materials like ground limestone will not be significantly reduced by the slurry forming process beyond their beginning particle size. Normally it is desirable that the particles be large enough that most will remain in the mat during the forming of the mat and not stay in the aqueous medium. Other additives such as wax, water repellent, surfactants, dispersants, defoamers, and biocides also can be included.

The resinous binder can be applied through various techniques including curtain coating, knife-over-roll coating, electrostatic coating, slot-die coating, etc. followed by drying. The resinous binder can be applied so that the binder permeates throughout the multilayer nonwoven fibrous mat and well bonds the fibers at cross-over points of contact thereby imparting structural integrity to the overall mat. If desired, the concentration of the binder at a given surface location in the mat can be increased such as at the outer surface. Typical concentrations of solids in the resinous binder composition as applied commonly range from approximately 5 to 30 percent by weight, and preferably approximately 15 to 25 percent by weight.

The resinous binder is applied in a quantity that maintains continuous interstices from one side of the mat to the other so that moisture satisfactorily can be removed as the cementitious core is dried and undergoes setting. Commonly the solid binder is present on the multilayer nonwoven fibrous mat following drying in a concentration of approximately 15 to 30 percent by weight of the multilayer fibrous material and most preferably in a concentration of approximately 19 to 20 percent by weight. The expeditious removal of moisture improves the appearance of the final product in the absence of surface blistering that may otherwise occur.

In addition to the resinous binder one or more secondary coatings can be applied so long as such coating does not impede the desired permeability.

In a preferred embodiment the nonwoven fibrous mat displays a Gurley permeability of about 60 seconds or less, and preferably approximately 20 to 40 seconds, prior to being adhered to the cementitious core. Such permeability measurement is conducted according to a modified form of ASTM-D726(B), and measures the resistance to air flow measured by a Gurley densometer. The Gurley permeability as specified herein employs 300 cc of air and 30.988cm (12.2 inches) of water rather than 10 cc of air and 12.3952cm (4.88 inches) of water.

The core of the board material in accordance with the present invention is cementitious in nature. Representative cementitious materials are gypsum, Portand cement, a possolanic material, and combinations of these. Such core materials commonly are introduced as a slurry and thereafter are dried to form a set solid board product. In a preferred embodiment the cementitious material is gypsum and following the setting thereof in the presence of the multilayer nonwoven fibrous mat an improved gypsum wallboard is made possible.

The slurry of the cementitious material during the formation of the improved board material of the present invention well penetrates interstices between adjoining fibers of the inner layer comprising coarser fibers of the multilayer nonwoven fibrous mat. Such penetration promotes the achievement of enhanced adhesion with the multilayer nonwoven fibrous mat upon the setting of the cementitious core.

The following example is presented to provide a specific example of the present invention. It should be understood, however, that the invention is not limited to the specific details set forth in the example.

### EXAMPLE

A multilayer nonwoven fibrous mat having two layers and a transition zone between layers is formed in accordance with the teachings of commonly assigned U.S. Pat. Application No. 11/179,393, filed July 12, 2005, while using fiber diameters in the respective inner and outer layers that satisfy the parameters of the present invention.

Both layers are formed of chopped E glass fibers. The glass fibers of the outer layer possess a diameter of approximately 8 microns, and possess a length of approximately 0.635cm to 1.27cm (0.25 to 0.5 inch). The glass fibers of the inner layer possess a diameter of approximately 16 microns, and possess a length of approximately 1.27cm to 2.54cm (0.5 to 1 inch). The outer layer measures approximately 35 percent of the mat in thickness, the inner layer measures approximately 60 percent of the mat in thickness; and the transition zone where there is a mixture of the fibers of the inner and outer layers measures approximately 5 percent of the thickness. The total thickness of the nonwoven fibrous mat measures approximately 0.8128mm (32 mils).

A styrene-acrylic copolymer latex resinous binder composition containing fine particles of calcium carbonate is substantially uniformly applied by the use of curtain coating so as to completely permeate the fibrous mat. Once the aqueous component of the binder is evaporated the remaining resinous binder composition is present in a concentration of 20 percent by weight based on the weight of the multilayer nonwoven fibrous mat.

The Gurley permeability of the resulting multifilamentary nonwoven fibrous mat is approximately 30 seconds. Such permeability makes possible the removal of moisture when the fibrous mat is contacted with a slurry of gypsum.

Next a gypsum wallboard is formed by contacting the multilayer nonwoven fibrous mat with an aqueous slurry of gypsum using standard processing parameters for wallboard production with both surfaces of the wallboard being faced with a multilayer nonwoven fibrous mat. The interstices between adjoining fibers of inner layer promote the ingress of the gypsum core material prior to setting with the achievement of enhanced adhesion between the set gypsum core and the multilayer nonwoven fibrous mats.

The relatively more closed outer surface also effectively resists strike-through of the cementitious core material prior to the setting of the core material.

The smooth outer surfaces of the resulting gypsum wallboard are smooth and aesthetically pleasing. These surfaces can be handled without unpleasant itchiness by workers, and can be painted at will or subjected to further sealing.

## Claims

1. A board material comprising a set cementitious core having adhered to at least one of its surfaces as a facer a multilayer nonwoven fibrous mat comprising at least two layers including an inner layer and an outer layer wherein the outer layer comprises relatively fine fibers having a diameter of 1 to 10 microns so as to make possible an aesthetically pleasing relatively smooth outer surface and an inner layer comprising relatively coarser fibers having a greater diameter than those of the inner layer with said coarser fibers providing interstices between adjoining fibers of the inner layer so as to promote the ingress of the cementitious core material prior to setting with the achievement of enhanced adhesion between the set cementitious core and said multilayer nonwoven fibrous mat.

2. A board material according to Claim 1 wherein said cementitious material is selected from the group consisting of gypsum, Portland cement, a possolanic material, and combination of combinations thereof.

3. A board material according to Claim 1 wherein said cementitious material is gypsum and said board material is gypsum wallboard.

4. A board material according to Claim 1 wherein said relatively coarser fibers of said inner layer of said multilayer nonwoven fibrous mat have a diameter of 12 to 30 microns.

5. A board material according to Claim 1 wherein said relatively coarser fibers of said inner layer of said multilayer nonwoven fibrous mat have a diameter of 15 to 20 microns.

6. A board material according to Claim 1 wherein said nonwoven multilayer fibrous mat has two layers.

7. A board material according to Claim 1 wherein said nonwoven multilayer fibrous mat has two layers and a transition zone between layers.

8. A board material according to Claim 1 wherein at least one layer of the inner and outer layers of said nonwoven multilayer fibrous mat comprises glass fibers.

9. A board material according to Claim 1 wherein the inner and outer layers of said nonwoven multilayer fibrous mat comprise glass fibers.

10. A board material according to Claim 1 wherein said multilayer nonwoven fibrous mat is bound together with a resinous binder while maintaining interstices between within said mat to facilitate permeability.

11. A broad material according to Claim 10 wherein said multilayer nonwoven fibrous mat additionally bears a secondary coating while maintaining interstices within said mat to facilitate permeability.

12. A board material according to Claim 1 wherein said nonwoven multilayer fibrous mat displays a Gurley permeability of 60 seconds or less prior to being adhered to said cementitious core.

13. A board material according to Claim 1 wherein said cementitious core is a set gypsum core and the outer layer of the multilayer nonwoven fibrous mat comprises relatively fine glass fibers having a diameter of 1 to 10 microns and the inner layer comprising relatively coarser glass fibers having a diameter of 15 to 20 microns.

14. A board material according to Claim 13 wherein said nonwoven multilayer fibrous mat has two layers.

15. A board material according to Claim 13 wherein said nonwoven multilayer fibrous mat has a transition zone between layers.

16. A board material according to Claim 13 wherein said multilayer nonwoven fibrous mat is bound together with a resinous binder while maintaining interstices within said mat so as to facilitate permeability.

17. A board material according to Claim 16 wherein said multilayer nonwoven fibrous mat additionally bears a secondary coating while maintaining interstices within said mat to facilitate permeability.

18. A board material according to Claim 13 wherein said nonwoven multilayer fibrous mat displays a Gurley permeability of 60 seconds or less prior to being adhered to said gypsum core.

## Patentansprüche

1. Ein Plattenmaterial, umfassend einen erhärteten, zementartigen Kern, bei dem an mindestens einer seiner Oberflächen als ein Facer eine vielschichtige, nichtgewebte, faserige Matte haftet, die mindestens zwei Schichten umfasst, die eine innere Schicht und eine äußere Schicht einschließen, wobei die äußere Schicht relativ feine Fasern mit einem Durchmesser von 1 bis 10 Mikron aufweist, um eine ästhetisch ansprechende, relativ glatte, äußere Oberfläche zu ermöglichen, und eine innere Schicht, die relativ gröbere Fasern mit einem größeren Durchmesser als die der inneren Schicht aufweist, wobei die gröberen Fasern zwischen benachbarten Fasern der inneren Schicht Zwischenräume bilden, um den Eintritt des zementartigen Kernmaterials vor Erhärten zu fördern mit dem Erfolg einer verbesserten Haftung zwischen dem erhärteten, zementartigen Kern und der vielschichtigen, nichtgewebten, faserförmigen Matte.

2. Plattenmaterial nach Anspruch 1, wobei das zementartige Material aus der Gruppe ausgewählt ist, bestehend aus Gips, Portlandzement, einem puzzolanischen Material und Kombination von Kombinationen davon.

3. Plattenmaterial nach Anspruch 1, wobei das zementartige Material Gips ist und das Plattenmaterial eine Gipswandbauplatte ist.

4. Plattenmaterial nach Anspruch 1, wobei die relativ gröberen Fasern der inneren Schicht der mehrschichtigen, nichtgewebten, faserigen Matte einen Durchmesser von 12 bis 30 Mikron haben.

5. Plattenmaterial nach Anspruch 1, wobei die relativ gröberen Fasern der inneren Schicht der mehrschichtigen, nichtgewebten, faserigen Matte einen Durchmesser von 15 bis 20 Mikron haben.

6. Plattenmaterial nach Anspruch 1, wobei die nichtgewebte, mehrschichtige, faserige Matte zwei Schichten hat.

7. Plattenmaterial nach Anspruch 1, wobei die nichtgewebte, mehrschichtige, faserige Matte zwei Schichten und eine Übergangszone zwischen Schichten hat.

8. Plattenmaterial nach Anspruch 1, wobei mindestens eine Schicht von innerer und äußerer Schicht der nichtgewebten, mehrschichtigen, faserigen Matte Glasfasern umfasst.

9. Plattenmaterial nach Anspruch 1, wobei die innere und äußere Schicht der nichtgewebten, mehrschichtigen, faserigen Matte Glasfasern umfasst.

10. Plattenmaterial nach Anspruch 1, wobei die mehrschichtige, nichtgewebte, faserige Schicht mit einem harzigen Bindemittel zusammengehalten wird, während Zwischenräume innerhalb der Matte aufrechterhalten bleiben, um Durchlässigkeit zu ermöglichen.

11. Plattenmaterial nach Anspruch 10, wobei die mehrschichtige, nichtgewebte, faserige Matte zusätzlich einen zweiten Überzug trägt, während Zwischenräume innerhalb der Matte aufrechterhalten werden, um Durchlässigkeit zu ermöglichen.

12. Plattenmaterial nach Anspruch 1, wobei die nichtgewebte, mehrschichtige, faserige Matte eine Gurley Durchlässigkeit von 60 Sekunden oder weniger zeigt, ehe sie an den zementartigen Kern geheftet wird.

13. Plattenmaterial nach Anspruch 1, wobei der zementartige Kern ein gehärteter Gipskern ist und die äußere Schicht der mehrschichtigen, nichtgewebten, faserigen Matte relativ feine Glasfasern umfasst, die einen Durchmesser von 1 bis 10 Mikron aufweisen und die innere Schicht relativ gröbere Glasfasern umfasst, die einen Durchmesser von 15 bis 20 Mikron haben.

14. Plattenmaterial nach Anspruch 13, wobei die nichtgewebte, mehrschichtige, faserige Matte zwei Schichten hat.

15. Plattenmaterial nach Anspruch 13, wobei die nichtgewebte, mehrschichtige, faserige Matte eine Übergangszone zwischen Schichten hat.

16. Plattenmaterial nach Anspruch 13, wobei die mehrschichtige, nichtgewebte, faserige Matte mit einem harzigen Bindemittel zusammengehalten wird, während innerhalb der Matte Zwischenräume aufrechterhalten werden, um Durchlässigkeit zu ermöglichen.

17. Plattenmaterial nach Anspruch 16, wobei die mehrschichtige, nichtgewebte, faserige Matte zusätzlich einen zweiten Überzug trägt, während Zwischenräume innerhalb der Matte aufrechterhalten werden, um Durchlässigkeit zu ermöglichen.

18. Plattenmaterial nach Anspruch 13, wobei die nichtgewebte, mehrschichtige, faserige Matte eine Gurley Durchlässigkeit von 60 Sekunden oder weniger zeigt, ehe sie an den Gipskern geheftet wird.

## Revendications

1. Matériau pour plaque comprenant un ensemble noyau cimentaire ayant adhéré au moins à une de ses surfaces comme une face un tapis fibreux non tissé multicouche comprenant au moins deux couches incluant une couche intérieure et une couche extérieure où la couche extérieure comprend des fibres relativement fines ayant un diamètre de 1 à 10 microns pour faire possible une surface extérieure relativement lisse esthétiquement agréable et une couche intérieure comprenant des fibres relativement plus grossières ayant un diamètre plus grand que celles de la couche intérieure avec lesdites fibres plus grossières pourvoyant des interstices entre les fibres adjacentes de la couche intérieure pour initier l'entrée du matériau de noyau cimentaire avant de produire la réalisation d'adhésion améliorée entre l'ensemble noyau cimentaire et ledit tapis fibreux non tissé multicouche.

2. Matériau pour plaque selon la revendication 1 où ledit matériau cimentaire est choisi du groupe formé de gypse, ciment Portland, un matériau possola-nique, et la combinaison de combinaisons de ceux-ci.

3. Matériau pour plaque selon la revendication 1 où ledit matériau cimentaire est du gypse et ledit matériau pour plaqueest le panneau mural de gypse.

4. Matériau pour plaque selon la revendication 1 où lesdites fibres relativement plus grossières de ladite couche intérieure dudit tapis fibreux non tissé multicouche ont un diamètre de 12 à 30 microns.

5. Matériau pour plaque selon la revendication 1 où lesdites fibres relativement plus grossières de ladite couche intérieure dudit tapis fibreux non tissé multicouche ont un diamètre de 15 à 20 microns.

6. Matériau pour plaque selon la revendication 1 où ledit tapis fibreux multicouche non tissé a deux couches.

7. Matériau pour plaque selon la revendication 1 où ledit tapis fibreux multicouche non tissé a deux couches et une zone de transition entre les couches.

8. Matériau pour plaque selon la revendication 1 où au moins une couche des couches intérieure et extérieure dudit tapis fibreux multicouche non tissé comprend les fibres de verre.

9. Matériau pour plaque selon la revendication 1 où les couches intérieure et extérieure dudit tapis fibreux multicouche non tissé comprend les fibres de verre.

10. Matériau pour plaque selon la revendication 1 où ledit tapis fibreux non tissé multicouche est lié ensemble avec un liant résineuxpendant qu'en maintenant les interstices dans ledit tapis pour faciliter la perméabilité.

11. Matériau pour plaque selon la revendication 10 où ledit tapis fibreux non tissé multicouche porte en outre un revêtement secondaire pendant qu'en maintenant les interstices dans ledit tapis pour faciliter la perméabilité.

12. Matériau pour plaque selon la revendication 1 où ledit tapis fibreux multicouche non tissé expose une perméabilité Gurley de 60 secondes ou moins avant d'être adhéré audit noyau cimentaire.

13. Matériau pour plaque selon la revendication 1 où ledit noyau cimentaire est un noyau de gypse et la couche extérieure du tapis fibreux non tissé multicouche comprend les fibres de verre relativement fines ayant un diamètre de 1 à 10 microns et la couche intérieure comprenant les fibres de verre relativement plus grossières ayant un diamètre de 15 à 20 microns.

14. Matériau pour plaque selon la revendication 13 où ledit tapis fibreux multicouche non tissé a deux couches.

15. Matériau pour plaque selon la revendication 13 où ledit tapis fibreux multicouche non tissé a une zone de transition entre les couches.

16. Matériau pour plaque selon la revendication 13 où ledit tapis fibreux non tissé multicouche est lié ensemble avec un liant résineuxpendant qu'en maintenant les interstices dans ledit tapis pour faciliter la perméabilité.

17. Matériau pour plaque selon la revendication 16 où ledit tapis fibreux non tissé multicouche porte en outre un revêtement secondaire pendant qu'en maintenant les interstices dans ledit tapis pour faciliter la perméabilité.

18. Matériau pour plaque selon la revendication 13 où ledit tapis fibreux multicouche non tissé expose une perméabilité Gurley de 60 secondes ou moins avant d'être adhéré audit noyau de gypse.
